(19) Europäisches Patentamt
European Patent Office
Office européen des brevets

(11) Veröffentlichungsnummer: **0 441 134 A2**

(12) # EUROPÄISCHE PATENTANMELDUNG

(21) Anmeldenummer: **91100446.3**

(22) Anmeldetag: **16.01.91**

(51) Int. Cl.5: **C08K 13/02**, //(C08K13/02,3:32, 5:3492)

(30) Priorität: **03.02.90 DE 4003231**

(43) Veröffentlichungstag der Anmeldung:
**14.08.91 Patentblatt 91/33**

(84) Benannte Vertragsstaaten:
**BE DE ES FR GB IT NL SE**

(71) Anmelder: **HOECHST AKTIENGESELLSCHAFT**
**Postfach 80 03 20**
**W-6230 Frankfurt am Main 80(DE)**

(72) Erfinder: **Eberspach, Werner, Dr.**
**Heimchenweg 84**
**W-6230 Frankfurt/Main 80(DE)**
Erfinder: **Scharf, Daniel, Dr.**
**120 Adirondack Drive**
**East Greenwich, Rhode island 02818(US)**
Erfinder: **Lysek, Manfred, Dr.**
**Martin-Legros-Strasse 79**
**W-5300 Bonn(DE)**

(54) **Flammwidrige polymere Massen.**

(57) Flammwidrige polymere Massen, vorzugsweise olefinische Polymere und/oder Copolymere, enthalten 8 bis 45 Masse-% eines Flammschutzsystems. Dieses Flammschutzsystem besteht mindestens aus einer Phosphorkomponente und einem monomeren Triazinylpiperazin. Dabei ist die Phosphorkomponente ein freifließendes, pulverförmiges, in Wasser schwerlösliches Ammoniumpolyphosphat, während als Triazinylpiperazin ein pulverförmiges Bis-triazinylpiperazin angewendet ist.

EP 0 441 134 A2

## FLAMMWIDRIGE POLYMERE MASSEN

Die vorliegende Erfindung betrifft flammwidrige polymere Massen, vorzugsweise olefinische Polymere und/oder Copolymere.

Aus der US-PS 3 810 862 ist bekannt, für die flammwidrige Ausrüstung von Polyolefinen Gemische von Ammoniumpolyphosphat, Melamin und Dipentaerythrit oder von Melaminpyrophosphat und Dipentaerythrit einzusetzen.

Nach der US-PS 4 312 805 enthalten selbstverlöschende Zusammensetzungen auf der Grundlage von Polypropylen Ammoniumpolyphosphat, Melamin und Polyamid 6.

Selbstverlöschende Polyolefine gemäß der US-PS 4 198 493 enthalten als Flammschutzmittel Ammoniumpolyphoshat, Cyanursäure und Tris(2-hydroxyethyl)isocyanurat.

Schließlich sind aus der EP-PS 115 871 selbstverlöschende olefinische Polymere und Copolymere bekannt, welche Ammoniumphosphat oder Aminphosphat und eine stickstoffhaltige, wasserunlösliche Verbindung, die aus Poly(triazinyl-piperazin) bestehen kann, enthalten.

Obwohl das relativ geringe Molekulargewicht von monomeren Triazinylpiperazinen ein allmähliches Auswandern aus der Polymermatrix und damit eine allmähliche Verschlechterung ihres Flammschutzes erwarten läßt, wurde nun überraschend gefunden, daß schon Mischungen aus Ammoniumpolyphosphat und monomeren Triazinyl-piperazinen vor allem in olefinischen Polymeren bzw. Copolymeren einen hervorragenden Flammschutzeffekt hervorbringen, der sich überdies als langzeitstabil erweist.

Im einzelnen betrifft die Erfindung flammwidrige polymere Massen, welche dadurch gekennzeichnet sind, daß sie 8 bis 45 Masse% eines Flammschutzssystems enthalten, welches mindestens aus einer Phosphorkomponente und einem monomeren Triazinyl-piperazin besteht, wobei die Phosphorkomponente ein freifließendes, pulverförmiges, in Wasser schwerlösliches Ammoniumpolyphosphat ist und wobei ein pulverförmiges Bis-triazinylpiperazin angewendet ist.

Darüber hinaus können die flammwidrigen polymeren Massen gemäß der Erfindung wahlweise auch noch dadurch weitergebildet sein, daß

a) das Flammschutzsystem zusätzlich einen pulverförmigen Co-Synergisten, ausgewählt aus der Gruppe Tris(2-hydroxyethyl)isocyanurat, Pentaerythrit, Dipentaerythrit, Melamincyanurat, Melamin, Melaminpentat, Piperazinpyrophosphat, Dicyandiamid oder Cellulose, enthält;

b) bis zu 7 Masse% Co-Synergist, bezogen auf die flammwidrigen polymeren Massen, enthalten sind;

c) das Flammschutzsystem zusätzlich bis zu 3 Masse%, bezogen auf die flammwidrigen polymeren Massen, eines Polymeren, ausgewählt aus der Gruppe Polyester, Polyamid, Polyacrylnitril, Polybenzimidazol, Polyphenylensulfid oder Polytetrafluorethylen, in Form eines Mikropulvers mit Partikelgrößen von weniger als 10 $\mu$m enthält;

d) das Flammschutzsystem zusätzlich bis zu 3 Masse%, bezogen auf die flammwidrigen polymeren Massen, mindestens eines Oxides, Hydroxides oder Carbonates eines Metalles oder Halbmetalles in Form von Pulvern enthält;

e) die pulverförmigen Oxide, Hydroxide oder Carbonate eines Metalles oder Halbmetalles Partikelgrößen von 0,01 bis 10 $\mu$m aufweisen;

f) das Flammschutzsystem zusätzlich bis zu 2 Masse%, bezogen auf die flammwidrigen polymeren Massen, mindestens eines stabilisierenden Agens, ausgewählt aus der Gruppe mehrkernige Phenole, Dialkylsulfide oder aromatische Phosphite, enthält;

g) das Flammschutzsystem zusätzlich bis zu 1 Masse%, bezogen auf die flammwidrigen polymeren Massen, Calciumstearat enthält;

h) das Ammoniumpolyphosphat gemäß der Formel $(NH_4PO_3)n$ eine Kettenlänge n von 200 bis 1000, vorzugsweise 700, einen Phosphorgehalt von 31,5 ± 0,5 Gewichts%, einen Stickstoffgehalt von 14,5 ± 0,5 Gewichts% sowie weniger als 10 % wasserlösliche Anteile - gemessen in 10 %iger wäßriger Suspension bei 25° C - aufweist (®Exolit 422);

i) das Ammoniumpolyphosphat gemäß der Formel $(NH_4PO_3)n$ mit einer Kettenlänge n von 200 bis 1000, vorzugsweise 700 mit Melamin/Formaldehyd-Harz mikroverkapselt ist und einen Phosphorgehalt von 29,0 ± 1 %, einen Stickstoffgehalt von 16,5 ± 1 % sowie weniger als 0,3 % wasserlösliche Anteile - gemessen in 10 %iger wäßriger Suspension bei 25° C - aufweist (®Exolit 462);

j) im Flammschutzsystem 5 bis 30 Masse% Ammoniumpolyphosphat, bezogen auf die flammwidrigen polymeren Massen, enthalten sind;

k) ein Bis-triazinylpiperazin der allgemeinen Formel

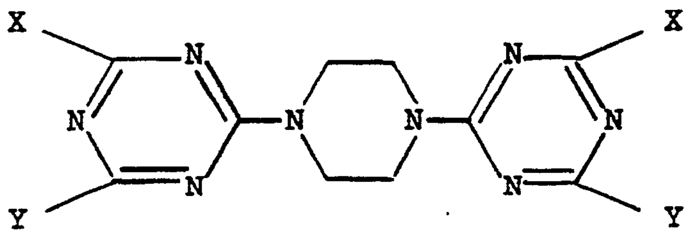

worin X und Y gleiche oder verschiedene Reste $-OR^1$, $-SR^1$ oder $NR^2R^3$ bedeuten, wobei

$R^1$

für eine $C_1$- bis $C_{18}$-Alkylgruppe, eine $C_5$- bis $C_{18}$-Cycloalkylgruppe, eine gegebenenfalls mit inerten Resten substituierte Phenyl- oder Naphthylgruppe oder für eine $C_7$- bis $C_{18}$-Aralkylgruppe steht;

$R^2$ und $R^3$

unabhängig voneinander für eine $C_1$- bis $C_3$-Alkylgruppe, eine $C_5$- bis $C_{18}$-Cycloalkylgruppe, eine gegebenenfalls mit inerten Resten substituierte Phenyl- oder Naphthylgruppe oder für eine $C_7$- bis $C_{18}$-Aralkylgruppe stehen, oder

$NR^2R^3$

für Piperidinyl der Formel

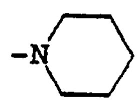

oder Morpholinyl der Formel

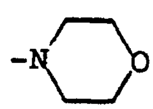

steht,

verwendet ist;

l) N,N'-Bis(2,4-dimethoxy-1,3,5-triazin-6-yl)piperazin verwendet ist;

m) N,N'-Bis(2,4-diethoxy-1,3,5-triazin-6-yl)piperazin verwendet ist;

n) N,N'-Bis(2,4-dimorpholinyl-1,3,5-triazin-6-yl)piperazin verwendet ist;

o) 3 bis 15 Masse% Bis-triazinyl-piperazin, bezogen auf die flammwidrigen polymeren Massen, enthalten sind.

Die Bis-triazinylpiperazine werden vorteilhaft mit Partikelgrößen von weniger als 80 $\mu$m eingesetzt.

Die erfindungsgemäß mit dem Flammschutzsystem ausgestatteten Polymere können sein: Polyethylen, Polypropylen, Polybuten-1, Polymethylpenten-1, Ethylen-Propylen-Copolymere, Terpolymere von Ethylen und Propylen mit einem Dien; Polystyrol, Polymethylstyrol; Mischungen von Polypropylen und Polyethylen, Polypropylen und Polybuten-1, Butadien-Acrylnitril-Copolymerisat mit Styrol-Butadien-Copolymerisat; Polyvinylchlorid, Polyacrylat, Polymethacrylat, Polyethylacrylat sowie deren Copolymere untereinander und mit anderen Vinylverbindungen (Acrylnitril-Butadien-Styrol-, Acrylnitril-Styrol- und Acrylnitril-Styrol-Acrylester-Copolymerisate); Cellulose-Acetat, Cellulose-Nitrat; Phenol-, Harnstoff- oder Melamin-Formaldehyd-Harz, Polyamid, Polyester, Polyformaldehyd, Polycarbonat.

Bei der Herstellung der flammwidrigen polymeren Massen gemäß der Erfindung ist eine möglichst homogene Verteilung des Flammschutzsystems im Polymeren anzustreben. Bei Thermoplasten werden dazu die Komponenten in feinverteilter Form intensiv vermischt sowie die Mischung extrudiert und granuliert.

In den Beispielen A, B und C wird die Herstellung von erfindungsgemäß anwendbaren Bis-triazinylpiperazinen beschrieben, während die in den Tabellen 1 bis 5 aufgeführten Beispiele 1 bis 27 erfindungsgemäße flammwidrige polymere Massen umfassen.

Beispiel A

Herstellung von N,N'-Bis(2,4-dimethoxy-1,3,5-triazin-6-yl)piperazin

550 ml Methanol, 55 ml Wasser, 0,25 g Tetra-n-butylammoniumhydrogensulfat und 1 Mol $NaHCO_3$ wurden vermischt und unter Einhaltung einer maximalen Reaktionstemperatur von 30° C portionsweise mit 0,5 Mol Cyanurchlorid versetzt, wobei sich ein pH-Wert von 5 bis 8 einstellte. Nach 40 minutigem Rühren bei Raumtemperatur wurde 30 Minuten unter Rückfluß erhitzt. Anschließend wurden wäßrige Lösungen von Piperazin (13 Gewichts%; 0,275 Mol) und Soda (20 Gewichts%; 0,275 Mol) hinzugetropft. Die Reaktionsmischung wurde eine Stunde bei Raumtemperatur gerührt und zwei Stunden unter Rückfluß erhitzt. Nach dem Abkühlen wurde mit verdünnter Schwefelsäure neutralisiert. Nach Filtrieren wurde der Rückstand mit Wasser gewaschen. Nach der Trocknung fiel ein feinkristallines weißes Pulver an.

| | |
|---|---|
| Ausbeute : | 87,2 % d. Th. |
| Schmelzpunkt : | 229 bis 232° C (unter Zersetzung) |
| Elementaranalyse: | Gefunden : C 45,78 %; H 5,70 %; N 31,18 % Berechnet: C 46,15 %; H 5,53 %; N 30,75 % (für $C_{14}H_{20}N_8O_4$) |

Beispiel B

Herstellung von N,N'-Bis(2,4-diethoxy-1,3,5-triazin-6-yl)piperazin

1 Mol $NaHCO_3$ und 0,5 g Tetra-n-butylammoniumhydrogensulfat wurden in einer Mischung von 400 ml Ethanol und 40 ml Wasser suspendiert und so langsam portionsweise 0,5 Mol Cyanurchlorid zugesetzt, daß die Reaktionstemperatur 30° C nicht überschritt und der pH-Wert zwischen 5 und 8 lag. Nach 60 minutigem Rühren bei Raumtemperatur wurde 30 Minuten unter Rückfluß erhitzt. Dann wurden bei Raumtemperatur gleichzeitig je 0,275 Mol Piperazin und Soda als wäßrige Lösungen (12 bzw. 20 Gewichts%) zugetropft. Die Reaktionsmischung wurde eine Stunde bei Raumtemperatur gerührt und anschließend drei Stunden unter Rückfluß erhitzt. Nach dem Abkühlen wurde abfiltriert und der Rückstand mit Wasser gewaschen und bis zur Gewichtskonstanz getrocknet. Es resultierte ein feinkristallines weißes Pulver.

| | |
|---|---|
| Ausbeute : | 81 % d. Th. |
| Schmelzpunkt : | 189 bis 193° C (unter Zersetzung) |
| Elementaranalyse : | Gefunden : C 50,98 %; H 6,30 %; N 27,12 % Berechnet: C 51,42 %; H 6,71 %; N 26,65 % (für $C_{18}H_{28}N_8O_4$) |

Beispiel C

Herstellung von N,N'-Bis(2,4-dimorpholinyl-1,3,5-triazin-6-yl)-piperazin

Die nachfolgend beschriebene Herstellung wurde unter Stickstoff durchgeführt.

0,5 Mol Cyanurchlorid wurden in einer Mischung aus 2 l Wasser und 1 kg Eis suspendiert und gleichzeitig tropfenweise mit 1 Mol Morpholin sowie 0,5 Mol NaOH (als wäßrige Lösung mit 10 Gewichts%) versetzt. Die Zugabe erfolgte so langsam, daß ein pH-Wert zwischen 5 und 10 aufrechterhalten wurde. Nach 30 minutigem Rühren bei 25° C wurden weitere 0,5 Mol NaOH (als wäßrige Lösung mit 10 Gewichts%) zugetropft. Die Reaktionsmischung wurde 90 Minuten lang auf 80° C erhitzt. Nach dem Abkühlen auf Raumtemperatur wurde tropfenweise mit 0,28 mol Piperazin und 0,56 Mol NaOH (als wäßrige Lösung mit 10 Gewichts%) versetzt. Schließlich wurde 12 Stunden lang unter Rückfluß erhitzt. Nach dem Abkühlen wurde abfiltriert und der Rückstand mit Wasser gewaschen und getrocknet. Es fiel ein feinkristallines weißes Pulver an.

| | |
|---|---|
| Ausbeute : | 98,4 % d. Th. |
| Schmelzpunkt : | 317 bis 321 ° C (unter Zersetzung) |
| Elementaranalyse : | Gefunden : C 52,94 %; H 7,23 %; N 28,93 % Berechnet: C 53,41 %; H 6,89 %; N 28,75 % (für $C_{26}H_{40}N_{12}O_4$) |

Die Herstellung der flammwidrigen polymeren Massen erfolgte durch Mischen der Komponenten in einem SPANGENBERG-Intensivmischer, Extrusion der Mischung in einem WEBER-Kleinextruder (20 mm Schneckendurchmesser) bei 180 bis 200° C und Granulation unter Verwendung eines DREHER-Laborgranulators. Die auf diese Weise hergestellten jeweils 500 g Granulat wurden anschließend in einer dampfbeheizten BECKER-VAN-HÜLLEN-Presse bei 195° C und einem Druck von 300 bar zu Testplatten von 1,6 mm Dicke geformt.

Aus den Testplatten wurden Prüfkörper von 127 mm Länge und 12,7 mm Breite geschnitten. Das Brandverhalten der Prüfkörper wurde nach der Vorschrift von UNDERWRITERS LABORATORIES: "Test for Flammibility of Plastic Material - UL 94" (Fassung vom 2. Mai 1975) ermittelt, während ihr Sauerstoffindex gemäß ASTM-D 2863 bestimmt wurde.

Die Ergebnisse der Brandprüfungen sind in den letzten beiden Zeilen der Tabellen 1 bis 4 aufgeführt.

Die Hochzahlen in den Tabellen 1 bis 4 bedeuten:

1) Polypropylen-Pulver der HOECHST AG, Frankfurt Schmelzindex (MFI 230/5) von 55 g/10 min

2a) 2b) Ammoniumpolyphosphat-Typen der HOECHST AG, Frankfurt

3) Mischung aus

| | |
|---|---|
| 0,16 % | ®Hostanox 0,3 (Stabilisator auf Basis mehrkerniger Phenole; Hoechst AG, Frankfurt) |
| 0,16 % | ® Hostanox SE 10 (Stabilisator auf Basis von Dialkylsulfiden; Hoechst AG, Frankfurt) |
| 0,16 % | ®Hostanox PAR 24, (Stabilisator auf Basis aromatischer Phosphite; Hoechst AG, Frankfurt) |
| 0,16 % | Calciumstearat |

4) Polyethylen-Pulver der HOECHST AG, Frankfurt Schmelzindex (MFI 190/5) von weniger als 0,1 g/10 min

Zum Nachweis der Alterungsbeständigkeit der erfindungsgemäß flammwidrig ausgerüsteten polymere Massen wurde das Produkt aus Beispiel 18 für unterschiedlich lange Zeiträume bei 150 °C in einem Umlufttrockenschrank gelagert. Nach jedem Lagerungsabschnitt wurde gemäß UL-94 klassifiziert und der Sauerstoffindex des Prüfkörpers bestimmt. Das Ergebnis des Alterungstests ist in Tabelle 5 aufgeführt.

TABELLE 1

| | Beispiele (Bestandteile in %) | | | | | | | | |
|---|---|---|---|---|---|---|---|---|---|
| | 1 | 2 | 3 | 4 | 5 | 6 | 7 | 8 | 9 |
| ®Hostalen PPU 0180[1)] | 69,36 | 69,36 | 69,36 | 69,36 | 69,36 | 69,36 | 67,29 | 67,29 | 67,29 |
| ®Exolit 422[2a)] | 19,33 | 18,67 | 18,67 | 18,67 | 19,33 | 18,00 | - | - | - |
| ®Exolit 462[2b)] | - | - | - | - | - | - | 20,74 | 20,74 | 20,05 |
| Verbindung nach Beispiel B | 9,67 | 9,33 | 9,33 | 9,33 | 9,67 | 9,00 | 9,33 | 9,33 | 9,02 |
| $TiO_2$ | 1,00 | 1,00 | - | 2,00 | - | 1,00 | 1,00 | - | 1,00 |
| $SiO_2$ | - | - | 1,00 | - | - | 1,00 | - | 1,00 | 1,00 |
| Polytetrafluorethylen | - | 1,00 | 1,00 | - | 1,00 | 1,00 | 1,00 | 1,00 | 1,00 |
| Standard-Additive[3)] | 0,64 | 0,64 | 0,64 | 0,64 | 0,64 | 0,64 | 0,64 | 0,64 | 0,64 |
| Ul-94-Vertikaltest (1,6 mm) | V-II | V-0 | V-II | V-II | V-II | V-0 | V-0 | V-II | V-0 |
| Sauerstoffindex | 29,0 | 30,5 | 30,0 | 31,0 | 29,0 | 31,0 | 29,5 | 29,5 | 30,5 |

TABELLE 2

| | Beispiele (Bestandteile in %) | | | | | | | | |
|---|---|---|---|---|---|---|---|---|---|
| | 10 | 11 | 12 | 13 | 14 | 15 | 16 | 17 | 18 |
| ®Hostalen PPU 0180[1)] | 70,00 | 69,36 | 72,36 | 72,36 | 72,36 | 72,36 | 72,36 | 72,36 | 76,36 |
| ®Exolit 422[2a)] | 20,00 | 20,00 | 18,00 | 17,33 | 17,33 | 17,33 | 16,67 | 16,67 | 14,00 |
| Verbindung nach Beispiel C | 10,00 | 10,00 | 9,00 | 8,67 | 8,67 | 8,67 | 8,33 | 8,33 | 7,00 |
| $TiO_2$ | - | - | - | 1,00 | - | - | - | 2,00 | - |
| $SiO_2$ | - | - | - | - | 1,00 | - | 1,00 | - | 1,00 |
| $Mg(OH)_2$ | - | - | - | - | - | - | 1,00 | - | - |
| Polytetrafluorethylen | - | - | - | - | - | 1,00 | - | - | 1,00 |
| Standard-Additive[3)] | - | 0,64 | 0,64 | 0,64 | 0,64 | 0,64 | 0,64 | 0,64 | 0,64 |
| UL-94-Vertikaltest (1,6 mm) | V-0 | V-0 | V-II | V-0 | V-II | V-0 | V-0 | V-0 | V-0 |
| Sauerstoffindex | 29,5 | 30,5 | 29,0 | 33,5 | 33,0 | 33,0 | 32,5 | 33,0 | 32,0 |

TABELLE 3

| | Beispiele (Bestandteile in %) | | | |
|---|---|---|---|---|
| | 19 | 20 | 21 | 22 |
| ®Hostalen PPU 0180[1)] | 70,42 | 70,42 | 70,42 | 74,45 |
| ®Exolit 462[2b)] | 19,27 | 18,58 | 18,58 | 15,82 |
| Verbindung nach Beispiel C | 8,67 | 8,36 | 8,36 | 7,12 |
| $TiO_2$ | 1,00 | 1,00 | 1,00 | - |
| $SiO_2$ | - | - | 1,00 | 1,00 |
| Polytetrafluorethylen | - | 1,00 | - | 1,00 |
| Standard-Additive[3)] | 0,64 | 0,64 | 0,64 | 0,64 |
| UL-94-Vertikaltest (1,6 mm) | V-0 | V-0 | V-II | V-0 |
| Sauerstoffindex | 32,0 | 31,5 | 31,5 | 30,0 |

TABELLE 4

| | Beispiele (Bestandteile in %) | | | | |
|---|---|---|---|---|---|
| | 23 | 24 | 25 | 26 | 27 |
| ®Hostalen GR 7255 P [4)] | - | - | - | - | 69,00 |
| ®Hostalen PPU 180[1)] | 72,36 | 72,36 | 72,36 | 72,36 | - |
| ®Exolit 422[2)] | 16,00 | 18,91 | 16,00 | 17,33 | 20,00 |
| Verbindung nach Beispiel C | 6,00 | 4,73 | 6,00 | 6,50 | 10,00 |
| Tris (2-hydroxyethyl)-isocyanurat | 4,00 | - | - | - | - |
| Melamin | - | 2,36 | - | - | - |
| Dipentaerythrit | - | - | 4,00 | - | - |
| Melamincyanurat | - | - | - | 2,17 | - |
| $TiO_2$ | 1,00 | 1,00 | 1,00 | 1,00 | 1,00 |
| Standard-Additive[3)] | 0,64 | 0,64 | 0,64 | 0,64 | - |
| UL-94-Vertikaltest (1,6 mm) | V-0 | V-0 | V-0 | V-0 | V-0 |
| Sauerstoffindex | 34,0 | 33,0 | 31,0 | 34,0 | 33,5 |

TABELLE 5

**Beispiel 18**

| | ohne Alterung | nach 20 Tagen 4) | nach 40 Tagen 4) | nach 60 Tagen 4) | nach 80 Tagen 4) |
|---|---|---|---|---|---|
| UL-94-Vertikaltest (1,6 mm) | V-0 | V-0 | V-0 | V-0 | n.k. 5) |
| Sauerstoffindex | 32,0 | 32,0 | 30,5 | 29,5 | 27,0 |

4) Lagerung bei 150°C in einem Umlufttrockenschrank
5) nicht klassifiziert

## Patentansprüche

1. Flammwidrige polymere Massen, vorzugsweise olefinische Polymere und/oder Copolymere, dadurch gekennzeichnet, daß sie 8 bis 45 Masse-% eines Flammschutzsystems enthalten, welches mindestens aus einer Phosphorkomponente und einem monomeren Triazinylpiperazin besteht, wobei die Phosphorkomponente ein freifließendes, pulverförmiges, in Wasser schwerlösliches Ammoniumpolyphosphat ist und wobei ein pulverförmiges Bis-triazinylpiperazin angewendet ist.

**2.** Flammwidrige polymere Massen nach Anspruch 1, dadurch gekennzeichnet, daß das Flammschutzsystem zusätzlich einen pulverförmigen Co-Synergisten, ausgewählt aus der Gruppe Tris(2-hydroxyethyl)-isocyanurat, Pentaerythrit, Dipentaerythrit, Melamincyanurat, Melamin, Melaminpentat, Piperazinpyrophosphat, Dicyandiamid oder Cellulose, enthält.

**3.** Flammwidrige polymere Massen nach Anspruch 2, dadurch gekennzeichnet, daß bis zu 7 Masse-% Co-Synergist, bezogen auf die flammwidrigen polymeren Massen, enthalten sind.

**4.** Flammwidrige polymere Massen nach mindestens einem der Ansprüche 1 bis 3, dadurch gekennzeichnet, daß das Flammschutzsystem zusätzlich bis zu 3 Masse-%, bezogen auf die flammwidrigen polymeren Massen, eines Polymeren ausgewählt aus der Gruppe Polyester, Polyamid, Polyacrylnitril, Polybenzimidazol, Polyphenylensulfid oder Polytetrafluorethylen in Form eines Mikropulvers mit Partikelgrößen von weniger als 10 $\mu$m enthält.

**5.** Flammwidrige polymere Massen nach mindestens einem der Ansprüche 1 bis 4, dadurch gekennzeichnet, daß das Flammschutzsystem zusätzlich bis zu 3 Masse-%, bezogen auf die flammwidrigen polymeren Massen, mindestens eines Oxides, Hydroxides oder Carbonates eines Metalles oder Halbmetalles in Form von Pulvern enthält.

**6.** Flammwidrige polymere Massen nach Anspruch 5, dadurch gekennzeichnet, daß die pulverförmigen Oxide, Hydroxide oder Carbonate eines Metalles oder Halbmetalles Partikelgrößen von 0,01 bis 10 $\mu$m aufweisen.

**7.** Flammwidrige polymere Massen nach mindestens einem der Ansprüche 1 bis 6, dadurch gekennzeichnet, daß das Flammschutzsystem zusätzlich bis zu 2 Masse-%, bezogen auf die flammwidrigen polymeren Massen, mindestens eines stabilisierenden Agens, ausgewählt aus der Gruppe mehrkernige Phenole, Dialkylsulfide oder aromatische Phosphite enthält.

**8.** Flammwidrige polymere Massen nach mindestens einem der Ansprüche 1 bis 7, dadurch gekennzeichnet, daß das Flammschutzsystem zusätzlich bis zu 1 Masse-%, bezogen auf die flammwidrigen polymeren Massen, Calciumstearat enthält.

**9.** Flammwidrige polymere Massen nach mindestens einem der Ansprüche 1 bis 8, dadurch gekennzeichnet, daß das Ammoniumpolyphosphat gemäß der Formel $(NH_4PO_3)_n$ eine Kettenlänge n von 200 bis 1000, vorzugsweise 700, einen Phosphorgehalt von 31,5 ± 0,5 Gewichts-%, einen Stickstoffgehalt von 14,5 ± 0,5 Gewichts-% sowie weniger als 10 % wasserlösliche Anteile - gemessen in 10 % wäßriger Suspension bei 25 °C - aufweist.

**10.** Flammwidrige polymere Massen nach mindestens einem der Ansprüche 1 bis 8, dadurch gekennzeichnet, daß das Ammoniumpolyphosphat gemäß der Formel $(NH_4PO_3)_n$ mit einer Kettenlänge n von 200 bis 1 000, vorzugsweise 700, mit Melamin/Formaldehyd-Harz mikroverkapselt ist und einen Phosphorgehalt von 29,0 ± 1 %, einen Stickstoffgehalt von 16,5 ± 1 % sowie weniger als 9,3 % wasserlösliche Anteile - gemessen in 10 %iger wäßriger Suspension bei 25 °C - aufweist.

**11.** Flammwidrige polymere Massen nach Anspruch 9 oder 10, dadurch gekennzeichnet, daß im Flammschutzsystem 5 bis 30 Masse-% Ammoniumpolyphosphat, bezogen auf die flammwidrigen polymeren Massen, enthalten sind.

**12.** Flammwidrige polmere Massen nach mindestens einem der Ansprüche 1 bis 11, dadurch gekennzeichnet, daß ein Bis-triazinylpiperazin der allgemeinen Formel

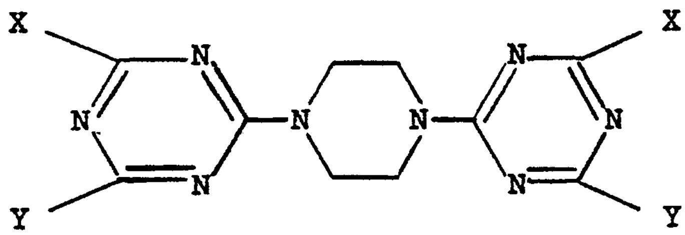

worin X und Y gleiche oder verschiedene Reste $-OR^1$, $-SR^1$ oder $NR^2R^3$ bedeuten, wobei

$R^1$

für eine $C_1$- bis $C_{18}$-Alkylgruppe, eine $C_5$- bis $C_{18}$-Cycloalkylgruppe, eine gegebenenfalls mit inerten Resten substituierte Phenyl- oder Naphthylgruppe oder für eine $C_7$- bis $C_{18}$-Aralkylgruppe steht;

$R^2$ und $R^3$

unabhängig voneinander für eine $C_1$- bis $C_3$-Al-kylgruppe, eine $C_5$- bis $C_{18}$-Cycloalkylgruppe, eine gegebenenfalls mit inerten Resten substituierte Phenyl- oder Naphthylgruppe oder für eine $C_7$- bis $C_{18}$-Aralkylgruppe stehen, oder

$NR^2R^3$

für Piperidinyl der Formel

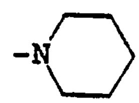

oder Morpholinyl der Formel

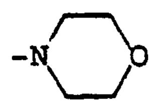

steht, verwendet ist.

**13.** Flammwidrige polymere Massen nach Anspruch 12, dadurch gekennzeichnet, daß N,N'-Bis(2,4-dimethoxy-1,3,5-triazin-6-yl-)piperazin verwendet ist.

**14.** Flammwidrige polymere Massen nach Anspruch 12, dadurch gekennzeichnet, daß N,N'-Bis(2,4-diethoxy-1,3,5-triazin-6-yl)piperazin verwendet ist.

**15.** Flammwidrige polymere Massen nach Anspruch 12, dadurch gekennzeichnet, daß N,N'-Bis(2,4-dimorpholinyl-1,3,5-triazin-6-yl)piperazin verwendet ist.

**16.** Flammwidrige polymere Massen nach mindestens einem der Ansprüche 1 bis 15, dadurch gekennzeichnet, daß 3 bis 15 Masse-% Bis-triazinylpiperazin, bezogen auf die flammwidrigen polymeren Massen, enthalten sind.

**Patentansprüche für folgenden Vertragsstaat: ES**

**1.** Verfahren zur Herstellung flammwidriger polymerer Massen, vorzugsweise von olefinischen Polymeren und/oder Copolymeren, dadurch gekennzeichnet, daß man eine Mischung von Polymeren und/oder Copolymeren mit 8 bis 45 Masse-% eines Flammschutzsystems, bezogen auf die Mischung, bei Temperaturen von 180 bis 200 °C extrudiert und das Extrudat granuliert, wobei das Flammschutzmittel aus einem freifließenden, pulverförmigen, in Wasser schwerlöslichen Ammoniumpolyphosphat und aus einem pulverfömigen, monomeren Bis-triazinylpiperazin besteht.

**2.** Verfahren nach Anspruch 1, dadurch gekennzeichnet, daß das Flammschutzsystem zusätzlich einen pulverförmigen Co-Synergisten, ausgewählt aus der Gruppe Tris(2-hydroxyethyl)isocyanurat, Pentaerythrit, Dipentaerythrit, Melamincyanurat, Melamin, Melaminpentat, Piperazinpyrophosphat, Dicyandiamid oder Cellulose, enthält.

3. Verfahren nach Anspruch 2, dadurch gekennzeichnet, daß bis zu 7 Masse-% Co-Synergist, bezogen auf die flammwidrigen polymeren Massen, enthalten sind.

4. Verfahren nach mindestens einem der Ansprüche 1 bis 3, dadurch gekennzeichnet, daß das Flammschutzsystem zusätzlich bis zu 3 Masse-%, bezogen auf die flammwidrigen polymeren Massen, eines Polymeren ausgewählt aus der Gruppe Polyester, Polyamid, Polyacrylnitril, Polybenzimidazol, Polyphenylensulfid oder Polytetrafluorethylen in Form eines Mikropulvers mit Partikelgrößen von weniger als 10 $\mu$m enthält.

5. Verfahren nach mindestens einem der Ansprüche 1 bis 4, dadurch gekennzeichnet, daß das Flammschutzsystem zusätzlich bis zu 3 Masse-%, bezogen auf die flammwidrigen polymeren Massen, mindestens eines Oxides, Hydroxides oder Carbonates eines Metalles oder Halbmetalles in Form von Pulvern enthält.

6. Verfahren nach Anspruch 5, dadurch gekennzeichnet, daß die pulverförmigen Oxide, Hydroxide oder Carbonate eines Metalles oder Halbmetalles Partikelgrößen von 0,01 bis 10 $\mu$m aufweisen.

7. Verfahren nach mindestens einem der Ansprüche 1 bis 6, dadurch gekennzeichnet, daß das Flammschutzsystem zusätzlich bis zu 2 Masse-%, bezogen auf die flammwidrigen polymeren Massen, mindestens eines stabilisierenden Agens, ausgewählt aus der Gruppe mehrkernige Phenole, Dialkylsulfide oder aromatische Phosphite enthält.

8. Verfahren nach mindestens einem der Ansprüche 1 bis 7, dadurch gekennzeichnet, daß das Flammschutzsystem zusätzlich bis zu 1 Masse-%, bezogen auf die flammwidrigen polymeren Massen, Calciumstearat enthält.

9. Verfahren nach mindestens einem der Ansprüche 1 bis 8, dadurch gekennzeichnet, daß das Ammoniumpolyphosphat gemäß der Formel $(NH_4PO_3)_n$ eine Kettenlänge n von 200 bis 1000, vorzugsweise 700, einen Phosphorgehalt von 31,5 ± 0,5 Gewichts-%, einen Stickstoffgehalt von 14,5 ± 0,5 Gewichts-% sowie weniger als 10 % wasserlösliche Anteile - gemessen in 10 % wäßriger Suspension bei 25 °C - aufweist.

10. Verfahren nach mindestens einem der Ansprüche 1 bis 8, dadurch gekennzeichnet, daß das Ammoniumpolyphosphat gemäß der Formel $(NH_4PO_3)_n$ mit einer Kettenlänge n von 200 bis 1000, vorzugsweise 700, mit Melamin/Formaldehyd-Harz mikroverkapselt ist und einen Phosphorgehalt von 29,0 ± 1 %, einen Stickstoffgehalt von 16,5 ± 1 % sowie weniger als 9,3 % wasserlösliche Anteile - gemessen in 10 %iger wäßriger Suspension bei 25 °C - aufweist.

11. Verfahren nach Anspruch 9 oder 10, dadurch gekennzeichnet, daß im Flammschutzsystem 5 bis 30 Masse-% Ammoniumpolyphosphat, bezogen auf die flammwidrigen polymeren Massen, enthalten sind.

12. Verfahren nach mindestens einem der Ansprüche 1 bis 11, dadurch gekennzeichnet, daß ein Bistriazinylpiperazin der allgemeinen Formel

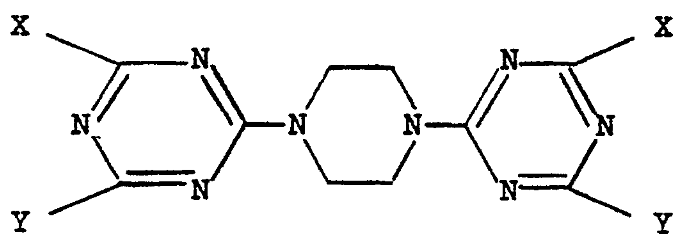

worin X und Y gleiche oder verschiedene Reste $-OR^1$, $-SR^1$ oder $NR^2R^3$ bedeuten, wobei $R^1$

für eine $C_1$- bis $C_{18}$-Alkylgruppe, eine $C_5$- bis $C_{18}$-Cycloalkylgruppe, eine gegebenenfalls mit inerten Resten substituierte Phenyl- oder Naphthylgruppe oder für eine $C_7$- bis $C_{18}$-Aralkylgruppe steht;
$R^2$ und $R^3$
unabhängig voneinander für eine $C_1$- bis $C_3$-Alkylgruppe,eine $C_5$- bis $C_{18}$-Cycloalkylgruppe, eine gegebenenfalls mit inerten Resten substituierte Phenyl- oder Naphthylgruppe oder für eine $C_7$- bis $C_{18}$-Aralkylgruppe stehen, oder
$NR^2R^3$
für Piperidinyl der Formel

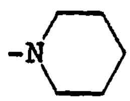

oder Morpholinyl der Formel

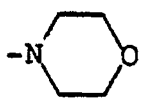

steht, verwendet ist.

**13.** Verfahren nach Anspruch 12, dadurch gekennzeichnet, daß N,N'-Bis(2,4-dimethoxy-1,3,5-triazin-6-yl)-piperazin verwendet ist.

**14.** Verfahren nach Anspruch 12, dadurch gekennzeichnet, daß N,N'-Bis(2,4-diethoxy-1,3,5-triazin-6-yl)-piperazin verwendet ist.

**15.** Verfahren nach Anspruch 12, dadurch gekennzeichnet, daß N,N'-Bis(2,4-dimorpholinyl-1,3,5-triazin-6-yl)piperazin verwendet ist.

**16.** Verfahren nach mindestens einem der Ansprüche 1 bis 15, dadurch gekennzeichnet, daß 3 bis 15 Masse-% Bis-triazinylpiperazin, bezogen auf die flammwidrigen polymeren Massen, enthalten sind.